# EUROPÄISCHE PATENTSCHRIFT

(11) **EP 3 043 937 B1**
(45) Veröffentlichungstag und Bekanntmachung des Hinweises auf die Patenterteilung: **30.10.2019**
(21) Anmeldenummer: 13794797.4
(22) Anmeldetag: 09.09.2013
(51) Int. Cl.: B23B 5/28

(54) **MOBILE VORRICHTUNG ZUR BEARBEITUNG ZWEIER RÄDER EINES RADSATZES**
MOBILE DEVICE FOR MACHINING TWO WHEELS OF A WHEELSET
APPAREIL MOBILE POUR USINER DEUX ROUES D'ESSIEUX

(43) Veröffentlichungstag der Anmeldung: 20.07.2016
(73) Patentinhaber: Stadler Service Nederland B.V., 7391 AK Twello (NL)
(72) Erfinder: BEUCKER, Kristian, 48161 Münster (DE)
(74) Vertreter: 't Jong, Bastiaan Jacob
(86) Internationale Anmeldenummer: PCT/DE2013/100319
(87) Internationale Veröffentlichungsnummer: WO 2015/032374

(56) Entgegenhaltungen:
- DE-U1-202007 016 469
- DE-U1-202010 007 239
- US-A- 3 044 368

## Beschreibung

Die Erfindung betrifft eine mobile Vorrichtung zur Bearbeitung zweier Räder eines Radsatzes.

Radsatzbearbeitungsverfahren sind in großer Zahl publiziert. Die Effizienz solcher Verfahren wird weitgehend dadurch bestimmt, wie es gelingt, die Antriebskräfte auf das Werkstück zu übertragen. Der einfachste Weg zur Erhöhung der übertragbaren Antriebskräfte (Tangentialkraft der Reibrollen) ist die Erhöhung der Anpresskraft (Normalkraft) der jeweiligen Reibrolle. Grosse Normalkräfte führen jedoch zur unzulässigen Auslenkung der Werkstück-Mittellinie aus der Bearbeitungs-Rotationsachse. Um diese Auslenkung zu verhindern, sind Lösungen bekannt, bei denen die Anordnungen der Stütz- und Antriebsrollen in Bezug auf das Werkzeug variiert werden. Üblicherweise wird der Radsatz zur Bearbeitung auf Stützrädern gelagert.
Teilweise sind die Radsätze federnd gelagert. In DE 1 783 030 U ist die Kombination von Reibradantrieb und federnd gelagerte Stützräder beschrieben. In DE 100 25 724 B4 wird eine Vorrichtung beschrieben, bei der Stützrollen vorhanden sind, die durch ein Widerlager, das als Hydraulik- oder Pneumatikzylinder ausgebildet ist, die beweglich angeordnet sind. Damit wird eine elastische Abstützung des Radsatzes erreicht. Eine Lageregelung zur Zentrierung von Radsätzen ist auch in DE 44 12 074 C2 beschrieben. Mit dieser Lösung wird ständig das Maß zwischen Werkzeug und Drehmitte während der Bearbeitung des Radprofils konstant gehalten. Andererseits sind Lösungen bekannt, bei denen mindestens zwei oder auch mehr Stützrollen verwendet werden, wobei jeweils zwei gegenüberliegend angeordnet sind. Diese dienen gleichzeitig zur Fixierung und zum Antrieb des Radsatzes. Gemäß DE 100 25 724 B4 wird dabei das Eisenbahnrad oder der Radsatz gegen Stützrollen gedrückt, von denen eine das Rad oder den Radsatz antreibt und nach DE 102 43 877 A1 wird der Radsatz mit den beiden Radscheiben auf mehreren Stütz- und Antriebsrollen einer ortsbeweglichen Radsatzmaschine abgesetzt. Danach wird die Radsatzwelle zwischen Körnerspitzen zweier Reitstöcke aufgenommen, die ihrerseits gegeneinander abgestützt sind. Die Lage des Radsatzes in Bezug auf die Mitte der Maschine wird festgestellt. Nach dem Ergebnis der Feststellung wird zuerst in Z-Richtung der Maschine ein Werkzeug zum Bearbeiten des Radreifens von wenigstens einer der beiden Radscheiben des Radsatzes eingestellt. Der Radsatz wird dabei von einer der Stütz- und Antriebsrollen in Drehung versetzt. Mit dem Werkzeug wird sodann der Rücken des Radreifens geplant. Der geplante Rücken des Radreifens wird in Z-Richtung abgestützt und der so abgestützte Radreifen mit einem Werkzeug, beginnend von der Vorderseite des Radreifens her, profiliert.

Gemäß DE 102 43 877 A1 wird der Radsatz mit den beiden Radscheiben auf mehreren Stütz- und Antriebsrollen einer ortsbeweglichen Radsatzmaschine abgesetzt. Danach wird die Radsatzwelle zwischen Körnerspitzen zweier Reitstöcke aufgenommen, die ihrerseits gegeneinander abgestützt sind. Die Lage des Radsatzes in Bezug auf die Mitte der Maschine wird festgestellt. Nach dem Ergebnis der Feststellung wird zuerst in Z-Richtung der Maschine ein Werkzeug zum Bearbeiten des Radreifens von wenigstens einer der beiden Radscheiben des Radsatzes eingestellt. Der Radsatz wird dabei von einer der Stütz- und Antriebsrollen in Drehung versetzt. Mit dem Werkzeug wird sodann der Rücken des Radreifens geplant. Der geplante Rücken des Radreifens wird in Z-Richtung abgestützt und der so abgestützte Radreifen mit einem Werkzeug, beginnend von der Vorderseite des Radreifens her, wie bei der vorgenannten Lösung profiliert.

Eine Lösung nach DE 10 2006 007 137 A1 betrifft eine auf Rollen (10, 10') gelagerte und auf einem Werkstattgleis (11) verfahrbare mobile Radsatzbearbeitungseinrichtung (2) zum Bearbeiten von Radsätzen (4, 6), die in einem Drehgestell drehbar gelagert sind, mit Hilfe einer mobilen Radsatzdrehmaschine (2), die mit einem zugehörigen Service-Container (3) verbunden werden kann, der ebenfalls auf Rollen (10) gelagert und auf dem Werkstattgleis (11) verfahrbar ist, sowie einer Einrichtung (7) zum Abstützen eines jeweils nicht in Bearbeitung befindlichen Radsatzes (4, 6) des Drehgestells. Die mobile Radsatzdrehmaschine (2), der Service-Container (3) und die Einrichtung (7) zum Abstützen der Radsätze (4, 6) sind auf einem gemeinsamen Tragrahmen (9) angeordnet, der auf Rollen (10) gelagert ist, die im Werkstattgleis (11) verfahrbar sind.

Die Druckschrift DE 91 09 904 U1 beschreibt eine Maschine zur zerspanenden Bearbeitung mindestens eines in Zentriermitteln (28) aufgenommenen Radsatzes (2), mit mindestens einer an die Umfangsfläche mindestens eines Rades (1) des Radsatzes (2) anlegbaren Reibrolle (3,3'), sowie mit mindestens einem Werkzeugträger (34) zur Aufnahme und zur Bewegung eines Bearbeitungswerkzeuges, wobei die anlegbaren Reibrollen (3,3') auch unter Anlagekraft so beweglich bleiben, dass sie radialen Lageveränderungen der jeweils momentanen Kontaktfläche folgen können. Von den anlegbaren Reibrollen sind mindestens jene Reibrollen (3,3'), bei denen eine unmittelbare Einwalzgefahr besteht, zur Abstützung und/oder zum Antrieb des Radsatzes so angeordnet, dass sie während der zerspanenden Bearbeitung zur Anlage an den Spurkranz (27) gebracht werden können.

Aus der Druckschrift DE 20 2007 016 469 U1 ist eine Unterflurradsatzdrehmaschine zum Bearbeiten des Profils von Rädern und Bremsscheiben von Radsätzen für Eisenbahnfahrzeuge bekannt, bei der jede Rolle eines Rollenpaares am freien Ende einer Rollenträgerschwinge dreh- und antreibbar gelagert ist, die aus einem Schwingenhebel und einem Hebel gebildet ist, welche an einem ersten Ende des Hebels fest miteinander verbunden und um eine Drehachse schwenkbar sind, die in einem radialen Abstand und parallel zur Drehachse des Radsatzes verläuft, wobei die beiden freien Enden des Hebels jeweils über einen Hubzylinder und erste Gelenke gelenkig miteinander verbunden sind, an denen zugleich jeweils eine Führungslasche mit einem ersten Ende gelenkig angreift, während sie mit ihrem zweiten Ende über ein zweites Gelenk mit einem Führungsstein gelenkig verbunden ist, der auf einer Führungsstange beweglich geführt ist, die fest an einem Ständer angeordnet ist. Die Spannorgane zum Festhalten des Radsatzes an den Achslagergehäusen lassen eine horizontale Bewegung des Radsatzes zu, die zwischen 1 und 5 mm, vorzugsweise 2 bis 3 mm, beträgt. Nachdem die Antriebsrollen am Umfang des Radsatzes angelegt haben, wird der Radsatz mit Hilfe der Hebelschwingen noch um ein begrenztes Maß vertikal angehoben.

Die DE 20 2008 009409 U1 beschreibt eine Unterflurradsatzdrehmaschine, bei der die Antriebsrollen jeweils mittels einer Schwinge höhenverstellbar sind, wobei die Schwinge mittels eines Hubzylinders betätigbar ist.

Der entscheidende Nachteil aller Lösungen, bei welchen Stützrollen verwendet werden, besteht darin, dass diese eine ungenügende Steifigkeit aufweisen und nicht bzw. nur eingeschränkt für unterschiedliche Radgrößen verwendbar sind.

Es ist weiterhin erforderlich, die mobilen Radsatzbearbeitungsmaschinen auf der Schiene zu arretieren. Dies erfolgt bekannter Weise mittels bekannter mechanischer Bremseinrichtungen. Die Druckschrift WO 2005/061158 A1 offenbart den Oberbegriff des Anspruchs 1. Bei dieser Druckschrift wird auf die Arretierung von Drehgestellen der Radsatzbearbeitungsvorrichtungen am Schienenprofil eingegangen. Dies erfolgt mit mechanischen Mitteln durch Klemmwirkung der Vorrichtung am Schienenprofil. Diese mechanischen Mittel erfordern einen hohen konstruktiven Aufwand und Unterliegen einem großen Verschleiß.

Aufgabe der Erfindung ist es, eine mobile Vorrichtung zur Radsatzbearbeitung zu entwickeln, die es gestattet, unterschiedliche Radgrößen zu bearbeiten, dabei einen zuverlässigen Toleranzausgleich der Radlager durch eine hohe Steifigkeit der Einrichtung zum Abstützen der Räder gewährleistet und kostengünstig herstellbar ist.

Diese Aufgabe wird durch die Merkmale des ersten Patentanspruchs gelöst. Vorteilhafte Ausgestaltungen ergeben sich aus den Unteransprüchen.

Die erfindungsgemäße mobile Vorrichtung zur Bearbeitung zweier Räder eines Radsatzes weist mindestens zwei Stützrollen zum Abstützen jeweils eines Rades des Radsatzes und mindestens eine Antriebsrolle zum Antreiben jeweils eines Rades des Radsatzes auf, wobei die Verfahrräder zum Verfahren der Vorrichtung auf dem Gleis an einem Untergestell angeordnet sind, welches sich zwischen zwei Schienen des Gleises quer zur X-Richtung in Z-Richtung (horizontal) erstreckt und die Antriebsrolle/n und Stützrollen an einem Hauptgestell angeordnet sind welches mit dem Untergestell gekoppelt ist und wobei die Stützrollen erste Drehachsen aufweisen, die im Wesentlichen in Y-Richtung ausgerichtet und die Antriebsrollen zweite Drehachsen aufweisen, in einem Winkel zu den ersten Drehachsen der Stützrollen angeordnet sind.

Dabei sind die Stützrollen vorteilhafter Weise exzentrisch schwenkbar/verstellbar zu deren Drehachse gelagert und dadurch entsprechend des Durchmessers des Rades in der Höhe sowie aufeinander zu und voneinander weg verstellbar/schwenkbar, wodurch diese einfach entsprechend des Durchmessers des Rades des Radsatzes verstellbar sind. Vorzugsweise sind dabei jeweils zwei Stützrollen, die ein Rad des Radsatzes abstützen, mittels nur eines Zylinders gleichzeitig verstellbar, wodurch ein kostengünstiger und einfacher Aufbau realisierbar ist.

Weiterhin ist jede Stützrolle in einem Drehpunkt exzentrisch gelagert und um den Drehpunkt mittels einer Zugstange drehbar/schwenkbar, wobei die zwei Zugstangen eines Paares von Stützrollen, welches einem Rad zugeordnet ist, mit dem Zylinder wirkverbunden sind. Die Zugstangen sind an ihren unteren Enden mit einer Verbindungsplatte gekoppelt, die wiederum mit dem Zylinder verbunden ist. Die zwei Stützrollen wirken bei Betätigung des Zylinders nach unten durch deren exzentrische Lagerung auf jedes Rad jeweils mit einer nach oben gerichteten Kraft F1, F2, wobei der Radsatz im Bereich seiner Achslager mittels einer Spanneinrichtung lagefixiert ist derart, dass im Bereich der Spanneinrichtung eine Kraft F3 in Z-Richtung (Gegenrichtung) auf die Achse bzw. das Radlager des Radsatzes und somit auf das Rad wirkt. Dadurch wird der Radsatz sehr sicher und schwingungsarm bzw. nahezu schwingungsfrei aufgenommen, so dass eine qualitativ hochwertige Bearbeitung gewährleistet ist.

Vorzugsweise greift eine erste Antriebsrolle außen am Rad und eine zweite Antriebsrolle innen im Bereich des Radreifens an, wobei die zweite Antriebsrolle mittels eines inneren Antriebes gegen das Rad spannbar ist, so dass das Rad auch mit der ersten Antriebsrolle in Wirkverbindung gelangt. Um eine Anpassung an den Raddurchmesser zu gewährleisten sind die Antriebsrollen verstellbar, bevorzugt schwenkbar gelagert derart, dass sie im radial außen liegenden Bereich der Außen- und Innenseite des Radreifens angreifen.

Die mobile Vorrichtung weist selbstverständlich Verfahrräder zum Verfahren der Vorrichtung auf einem Gleis in X-Richtung auf. Weiterhin sind vorteilhafter Weise Mittel zum Fixieren der Vorrichtung auf dem Gleis vorgesehen.

Zum Verfahren der Vorrichtung auf dem Gleis ist diese vom Gleis abhebbar und zum Fixieren auf das Gleis absenkbar, wobei das Untergestell im abgesenkten Zustand mittels mechanischer und/oder magnetischer Spannmittel/Klemmmittel auf den Schienen fixierbar ist.

Dazu sind die Verfahrräder zum Verfahren der Vorrichtung schwenkbar (über einen Schwenkhebel) an dem Untergestell angeordnet derart, dass bei einem aufeinander zu Schwenken der vorderen und hinteren Verfahrräder das Untergestell anhebbar ist und bei einem voneinander weg Schwenken der vorderen und hinteren Verfahrräder das Untergestell absenkbar ist. Dies erfolgt bevorzugt mittels jeweils eines Arbeitszylinders, mit dem jeweils ein Schwenkhebel eines Rades schwenkbar ist. Die Betätigung der zwei vorderen und der zwei hinteren Schwenkhebel erfolgt dabei im Wesentlichen zeitgleich.

Als Nothilfe bzw. in einer alternativen Varianten kann das Untergestell auch mittels Hubzylindern von der Schiene anhebbar sein, so dass dann die Vorrichtung auf der Schiene mit den Verfahrrädern des Untergestells verfahrbar ist.

Um eine schwingungsfreie Bearbeitung zu gewährleisten ist weiterhin das Hauptgestell auf dem Untergestell schwingungsentkoppelt, insbesondere mittels elastischer Lager, gelagert.

Die elastischen Lager sollten dabei eine hohe Eigenfederung aufweisen und Schwingungen des Hauptgestells aufnehmen. Die Erfindung wird nachfolgend anhand von Ausführungsbeispielen und zugehörigen Zeichnungen näher erläutert.

Es zeigen:
- Figur 1: eine Seitenansicht der Vorrichtung im auf der Schiene verfahrbaren Zustand,
- Figur 2: eine Seitenansicht im abgesenkten Zustand,
- Figur 3: eine dreidimensionale Darstellung der Vorrichtung,
- Figur 4: eine Prinzipdarstellung der auf ein Rad eines Radsatzes bei der Bearbeitung wirkenden Kräfte,
- Figur 5: eine Prinzipdarstellung der Verstellung der Stützrollen,
- Figur 6: das vereinfacht dargestellte kinematische Wirkprinzip,
- Figur 7: die dreidimensionale Darstellung einer Variante der Ausgestaltung der Spannvorrichtung,
- Figur 8: die Seitenansicht eines Spannhakens,
- Figur 9: die Seitenansicht der Spannvorrichtung gemäß Figur 7 mit Spannhaken in zwei unterschiedlichen Spannpositionen,
- Figur 10: die dreidimensionale Darstellung einer Spannvorrichtung gemäß Figur 7 in Spannposition.

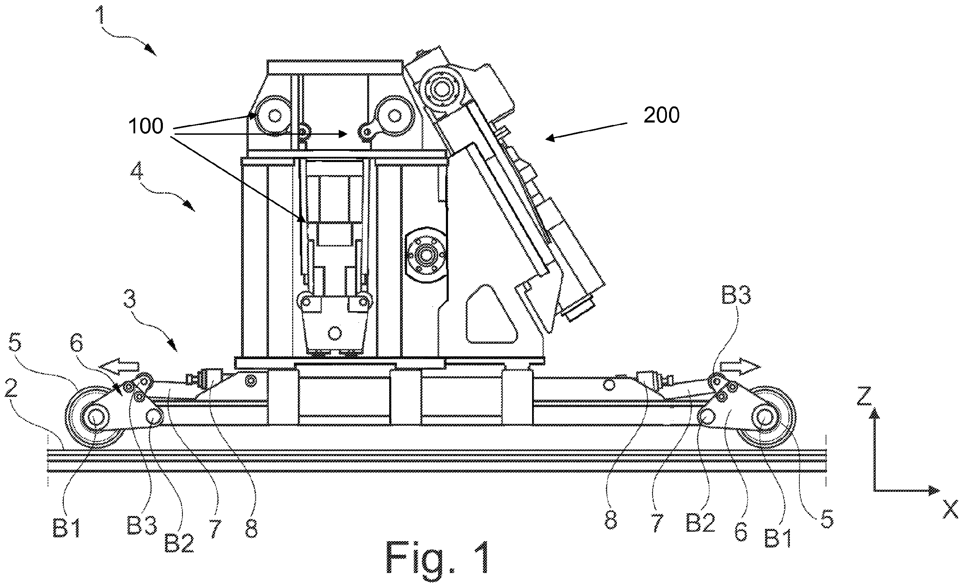

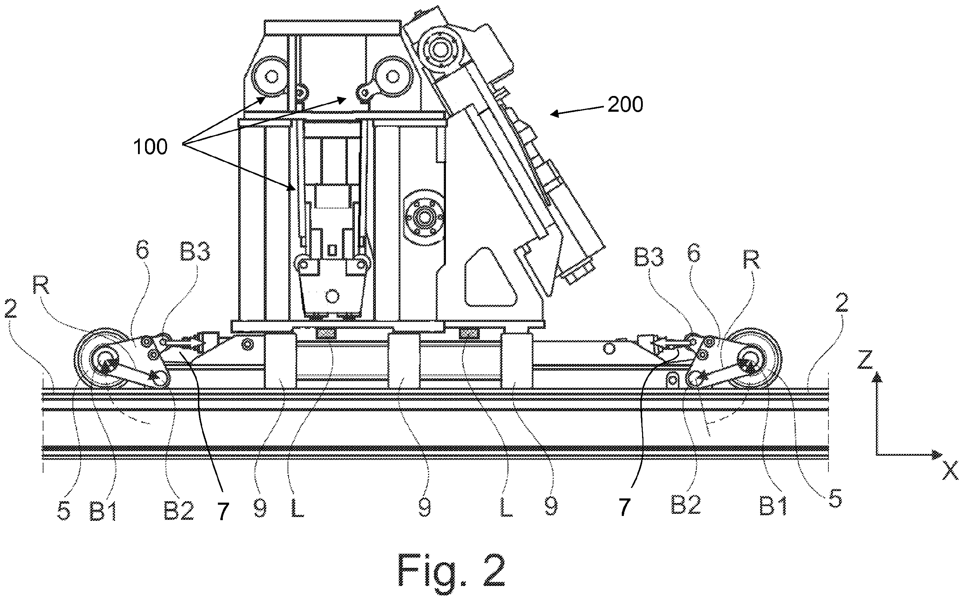

In Figur 1 ist eine Seitenansicht der Vorrichtung 1 im auf der Schiene 2 verfahrbaren Zustand und in Figur 2 eine Seitenansicht im abgesenkten Zustand dargestellt. Die Vorrichtung weist ein Untergestell 3 auf, über dem schwingungsentkoppelt ein Hauptgestell 4 aufgenommen ist, auf dem der hier nicht dargestellte Radsatz aufgenommen und bearbeitet wird. Um eine schwingungsfreie Bearbeitung zu gewährleisten kann das Hauptgestell 4 auf dem Untergestell 3 schwingungsentkoppelt, gelagert sein. Dazu können beispielsweise dafür vorgesehene elastische Lager (nicht dargestellt) eine hohe Eigenfederung aufweisen und Schwingungen des Hauptgestells aufnehmen.

Das Untergestell 3 besitzt vier Verfahrräder 5 zum Verfahren auf der Schiene 2. Jedes Verfahrrad 5 ist über einen Schwenkhebel 6 schwenkbar am Untergestell 3 gelagert. Der Schwenkhebel 6 ist jeweils in einem ersten Anbindungspunkt B1 am Verfahrrad 5 und in einem zweiten Anbindungspunkt B2 am Untergestell 3 drehbar bzw. schwenkbar gelagert. An einem dritten Anbindungspunkt B3 ist ein Schubelement 7, hier in der Art einer Schubstange befestigt, die mit dem Kolben eines Arbeitszylinders 8 in Wirkverbindung steht oder den Kolben bildet. Gemäß Figur 1 wurden die Schubelemente 7 in Pfeilrichtung (dicke Pfeile) mittels der Arbeitszylinder 8 voneinander weg betätigt, wodurch die Schwenkhebel 6 um den zweiten Anbindungspunkt B2 so geschwenkt wurden, dass sich das Untergestell 3 von der Schiene 2 abgehoben hat und wobei die vorderen und hinteren Verfahrräder 5 aufeinander zu bewegt/geschwenkt wurden. Die Vorrichtung 1 kann nun entlang der Schiene 2 verfahren werden.

Aus den Figuren 1 und 2 ist auch die Aktorik 100 zur Verstellung der hier nicht sichtbaren Stützrollen und der Support 200 mit dem nicht bezeichneten Antrieb erkennbar, der dazu dient, die hier nicht sichtbaren Antriebsrollen in Rotation zu versetzen.

Zum Ablegen der Vorrichtung 1 auf der Schiene 2 wurden gemäß Figur 2 die Schubelemente 7 durch Betätigung der Arbeitszylinder 8 aufeinander zu bewegt, wodurch die jeweils an dem Schwenkhebel 6 befestigten vorderen und hinteren Verfahrräder 5 auf dem gestichelt angedeuteten Kreisbogen, dessen Radius R dem Abstand zwischen B1 und B2 entspricht, voneinander weg geschwenkt werden und sich die Vorrichtung dadurch absenkt. Das Lagefixieren der Vorrichtung 1 auf der Schiene 2 erfolgt gemäß Figur 2 mittels magnetischer Spannmittel 9, die an dem Untergestell 3 angeordnet sind und eine magnetische Feststellung an der Schiene 2 bewirken.
Alternativ kann auch eine mechanische Klemmung/Spannung oder eine Kombination von mechanischer und elektromagnetischer Spannung/Klemmung realisiert werden.

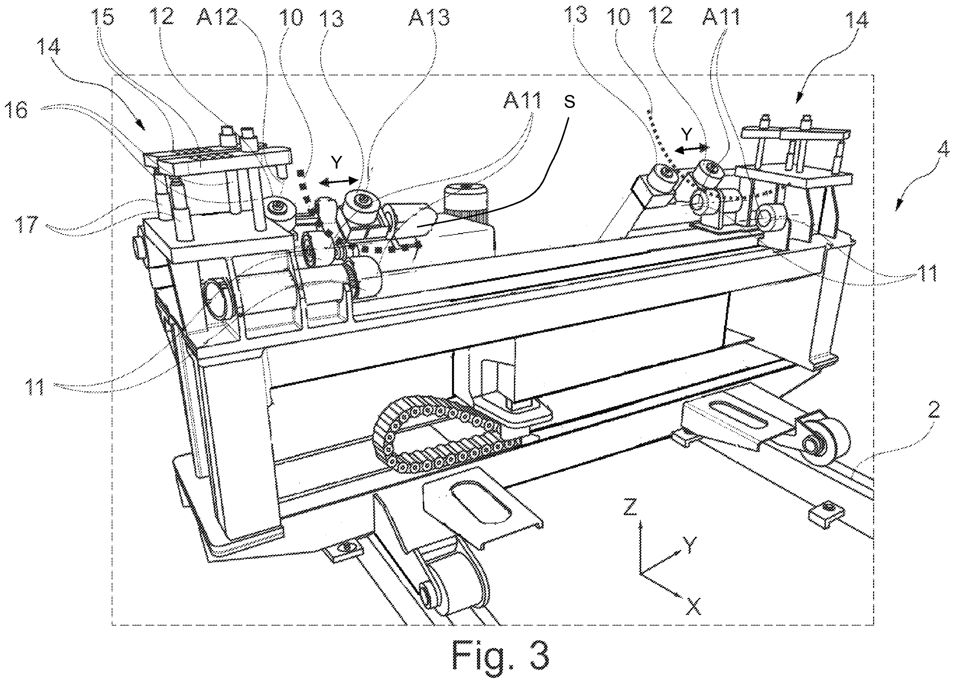

Gemäß Figur 3 wird eine dreidimensionale Darstellung der Vorrichtung 1 gezeigt, aus welcher ersichtlich ist, dass entsprechend des Abstandes zweier Räder 10 (angedeutet durch Strichlinie) eines hier nicht dargestellten Radsatzes jeweils zwei Stützrollen 11 für jedes Rad 10 vorgesehen sind, auf welchen die Lauffläche des jeweiligen Rades 10 abrollt. Die Drehachsen A11 der Stützrollen 11 sind im Wesentlichen in Y-Richtung (Quer zum Verlauf der Schienen 2 in X-Richtung) ausgerichtet. Der Antrieb jedes Rades 10 erfolgt über zwei Antriebsrollen 12, 13. Eine erste Antriebsrolle 12 greift an der äußeren Stirnseite des Rades 10 und eine zweite Antriebsrolle 13 an der inneren Stirnseite des Rades 10 im Bereich des äußeren Durchmessers an. Die zweite Antriebsrolle 13 ist dabei mittels des hier nicht sichtbaren Antriebes über Stellmittel S in Y-Richtung (angedeutet durch die Pfeile), gegen die Innenseite des Rades 10 spannbar, so dass das Rad 10 auch mit der ersten Antriebsrolle 12 in Wirkverbindung gelangt. Die Drehachsen A12 der ersten Antriebsrollen 12 und A13 der zweiten Antriebsrollen13 sind in einem Winkel zu den Drehachsen A11 der Stützrollen 11 gelagert. Die Drehachsen A12, A13 der Antriebsrollen 12, 13 liegen im Wesentlichen um 90° versetzt zu den Achsen A11 und verlaufen schräg von oben nach unten. Weiterhin sind die Antriebsrollen 12, 13 umfangsseitig versetzt zu den Stützrollen 11 angeordnet, wobei die Stützrollen unterhalb des Rades liegen und im Abstand zueinander angeordnet sind, so dass das Rad 10 umfangsseitig von beiden aufgenommen wird, und die Antriebsrollen 12, 13 in Achsrichtung des Rades 10 nebeneinander aber oberhalb der Stützrollen 11 liegen.
Die Stützrollen 11 liegen somit bezogen auf den Umfang der Laufflächen (umfangsseitig) nebeneinander und die Antriebsrollen 12, 13 liegen bezogen auf die Außen- und Innenseite des Rades 10 nebeneinander.
Dadurch wird das Rad 10 umfangsseitig durch die Stützrollen 11 fixiert und axial durch die beiden Antriebsrollen 12, 13, wodurch eine sehr sichere und spielfreie/spielarme Aufnahme jedes Rades gewährleistet wird.

Es ist auch möglich, den Anstellwinkel der Drehachsen A12, A13 der Antriebsrollen 12, 13 in Bezug auf die äußere und/oder innere Stirnseite des Rades 10 zu verändern.

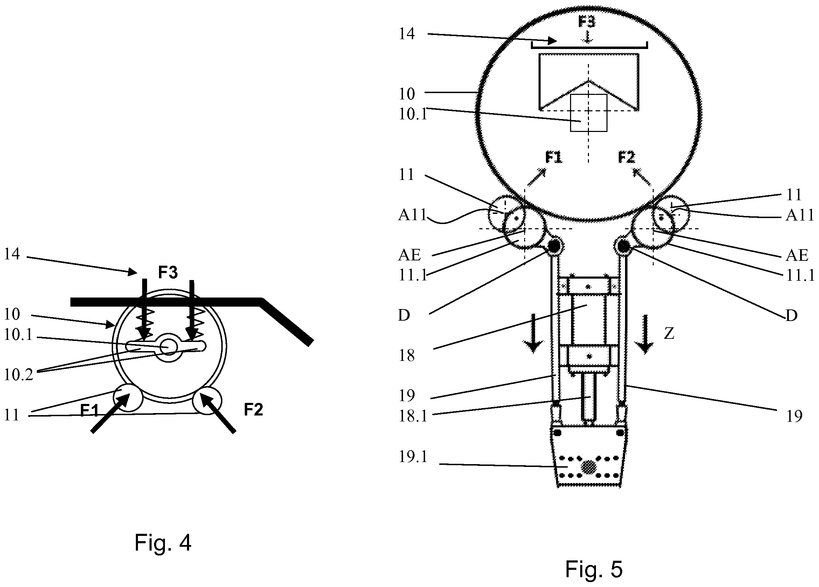

Die Stützrollen 11 sind drehbar gelagert und vorteilhafter Weise exzentrisch verstellbar und dadurch entsprechend des Durchmessers des Rades 10 in der Höhe sowie aufeinander zu und voneinander weg verstellbar/schwenkbar, wodurch diese einfach entsprechend des Durchmessers des Rades 10 des Radsatzes verstellbar sind. Vorzugsweise sind dabei jeweils zwei Stützrollen 11, die ein Rad 10 des Radsatzes abstützen, mittels nur eines Zylinders gleichzeitig verstellbar (s. Figur 5), wodurch ein kostengünstiger und einfacher Aufbau realisierbar ist.

Auf dem Hauptgestell 4 ist, jeweils einem jedem Rad 10 zugeordnet, eine Spanneinrichtung 14 vorgesehen. Die das Rad 10 mit einer nach unten wirkenden Kraft F3 gegen die Stützrollen 11 drückt (Fig. 4 und 5), wodurch Toleranzen des Radlagers des jeweiligen Rades 10 kompensiert werden.

Jede Spanneinrichtung 14 weist zwei im Wesentlichen in Y-Richtung weisende Querträger 15 auf, die über sich vertikal erstreckende Stützen 16, 17 höhenverstellbar sind (je Querträger 15 eine Stütze 16 und eine davon beabstandete Stütze 17) und das Rad gegen die Stützrollen spannen. Die Spannung erfolgt hier beispielsweise mechanisch mittels eines Gewindes an den Stützen 16 und nicht bezeichneter Muttern, durch welche die Querträger 15 gegen das Radlager (nicht dargestellt) verspannbar sind. Die Bezugszeichen 15 bis 17 wurden hier nur in der links dargestellten Spanneinrichtung 14 angetragen. Die Spanneinrichtung 14 auf der gegenüberliegenden Seite ist analog aufgebaut.

Die beiden Räder 10 einer Radachse werden mittels nicht dargestellter Werkzeuge bekannter Weise vorzugsweise gleichzeitig spanend bearbeitet, wobei die Werkzeuge unten am jeweiligen Rad 10 im Wesentlichen mittig zu den Stützrollen 11 angreifen. Dadurch, dass das/die Werkzeuge unterhalb eines Rades 10 angeordnet sind, können die anfallenden Späne einfach entsorgt werden.

In Figur 4 ist die Prinzipdarstellung der auf das Rad 10 wirkenden Spannkräfte dargestellt. Die Stützrollen 11 wirken von unten jeweils mit einer Kraft F1, F2 gegen das Rad 10 und die Spanneinrichtung 14 wirkt mit einer Kraft F3 von oben dagegen, wobei diese sich vom Radlager 10.1 beidseitig erstreckende Ausleger 10.2 nach unten drückt. Dadurch ist jedes Rad 10 des Radsatzes sicher fixiert und Toleranzen des Radlagers 10.1 werden kompensiert.

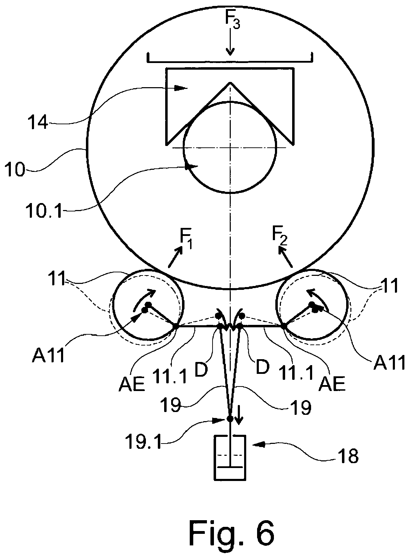

In Figur 5 wird eine Prinzipdarstellung der Verstellbarkeit der Stützrollen 11 und in Figur 6 das vereinfachte kinematische Wirkprinzip gezeigt.
Jede Stützrolle 11 ist um eine Drehachse A11drehbar gelagert. Zusätzlich sind die Stützrollen 11 exzentrisch zu deren Drehachse A11 in einer Schwenkachse AE höhenverstellbar schwenkbar gelagert und dadurch entsprechend des Durchmessers des Rades 10 in der Höhe sowie aufeinander zu und voneinander weg verstellbar/schwenkbar, wodurch diese einfach entsprechend des Durchmessers des Rades 10 des Radsatzes in ihrem Abstand zueinander verstellbar sind. Vorteilhafter Weise sind dabei jeweils zwei Stützrollen 11, die ein Rad 10 des Radsatzes abstützen, mittels nur eines Zylinders 18 über die Kolbenstange 18.1 gleichzeitig verstellbar, wodurch ein kostengünstiger und einfacher Aufbau realisierbar ist.

Jede Stützrolle 11 ist an einem Zwischenelement 11.1 in seiner Drehachse A11 drehbar gelagert, wobei das Zwischenelement 11.1 wiederum um eine Schwenkachse AE exzentrisch zur Drehachse A11 aufgenommen und um die Schwenkachse AE mittels einer Zugstange 19 drehbar/schwenkbar um die Schwenkachse AE ist.

Jede Zugstange 19 ist dabei mit ihrem oberen Ende an einem Zwischenelement 11.1 in einem Anbindungspunkt D befestigt und an ihrem unteren Enden mit einer Verbindungsplatte 19.1 gekoppelt, die wiederum mit dem Zylinder 18 verbunden ist. Die beiden Zugstangen 19 sind im Wesentlichen parallel zueinander und beidseitig zu dem Zylinder 18 und der Verbindungsplatte 20 angeordnet. Die zwei Stützrollen 11 wirken bei einer Betätigung des Zylinders 18 nach unten, durch deren Aufnahme an dem Zwischenelement 11.1, mit der zur Drehachse A11 exzentrischen Lagerung, auf jedes Rad 10 jeweils mit einer nach oben gerichteten Kraft F1, F2, wobei der Radsatz über das jeweilige Rad 10 im Bereich seiner Achslager/Radlager 10.1 mittels der Spanneinrichtung 14 lagefixiert ist derart, dass im Bereich der Spanneinrichtung 14 eine Kraft F3 in Z-Richtung (Gegenrichtung) nach unten auf das Achslager/Radlager 10.1 des Radsatzes wirkt. Dadurch wird der Radsatz sehr sicher und schwingungsarm aufgenommen, so dass eine qualitativ hochwertige Bearbeitung gewährleistet ist.

Durch die erfindungsgemäße Lösung wird gewährleistet, dass das Zentrum der Radsätze präzise und fest über dem spanenden Bearbeitungswerkzeug (z.B. Drehmeißel) positioniert und fixiert sind, da mit der erfindungsgemäßen Vorrichtung die Stützrollen 11 mit bevorzugt hydraulischer Kraft direkt von unten gegen die Räder 10 des Radsatzes gedrückt werden, wobei die Vorrichtung im Vergleich zu anderen Radsatzbearbeitungseinrichtungen ein geringes Gewicht aufweist.
Mit der Erfindung werden somit neben der Gewichtsreduzierung der Vorrichtung die erforderlichen Kräfte für die Befestigung/Fixierung der Radsätze bereitgestellt und dabei eine hohe Stabilität des Befestigungssystems gewährleistet, was wiederum die Voraussetzung für eine qualitativ hochwertige Bearbeitung/Nachbearbeitung ist.
Für die Bearbeitung der Radsätze werden diese, wie bereits vorgenannt beschrieben, von oben im Bereich ihrer Radlager 10.1 bzw. des Radlagergehäuses mit einer nach unten wirkenden Kraft F3 beaufschlagt. Von unten werden die zwei Stützrollen 11, die nicht angetrieben sind, sondern mit dem durch die Antriebsrollen 12, 13 angetriebenen Rad 10 mitlaufen, durch ein mechanisches System umfangsseitig von unten gegen die Räder 10 gepresst. Das mechanischen Systems basiert auf der Aufteilung einer nach oben gerichteten Spannkraft auf die zwei Stützrollen 11, die exzentrisch verstellbar sind. Durch Verstellen der Exzenter mittels eines Betätigungselementes, hier mit dem hydraulisch betätigtem Zylinder 18, wird eine Kraft auf die Hebel/Zwischenelemente 11.1 der exzentrischen Lagerung übertragen und die Stützrollen 11 werden nach oben oder unten bewegt, wobei dies sehr präzise erfolgt und die auf das Rad 10 wirkenden Kräfte genau dosierbar bzw. einstellbar sind. Jedes Rad 10 eines Radsatzes wir daher durch exakt drei Kräfte gehalten: eine vertikal von oben nach unten auf den Lagerbereich / das Achslager wirkende Kraft F3 und zwei radiale Kräfte F1, F2, die symmetrisch zu der von oben wirkenden Kraft F3 auf den Umfang des Rades nach oben wirken.
Durch Betätigung des Zylinders 18 nach unten (siehe Figur 6) über die nach unten gerichtete Bewegung der Verbindungsplatte 19.1 und der daran befestigten Zugstangen 19 bewegen sich die jeweiligen Anbindungspunkte D der Zwischenelemente 11.1 nach unten und das Zwischenelement 11.1 wird um die Schwenkachse AE geschwenkt. Die am Zwischenelement 11.1 aufgenommenen Stützrollen 11 werden dadurch ebenfalls um die Schwenkachse AE nach oben geschwenkt. Das Zwischenelement 11.1 ist somit in der Art eines um die gestellfeste Schwenkachse AE schwenkbaren Hebels (in der Art einer Wippe) ausgebildet, wobei ein Ende jedes Zwischenelementes 11.1 an einer Zugstange 19 befestigt ist und am anderen Ende des Hebels/Zwischenelementes 11.1 das Stützrad 11 um seine Drehachse A11 drehbar aufgenommen ist.

Bei einer Bewegung des Zylinders 18 nach oben, wird über jeweils eine Zugstange 19 ein Zwischenelement 11.1 um die Schwenkachse AE so geschwenkt (da die Anbindungspunkte D nach oben bewegt werden), dass die daran aufgenommenen Stützrollen 11 wieder nach unten geschwenkt werden.

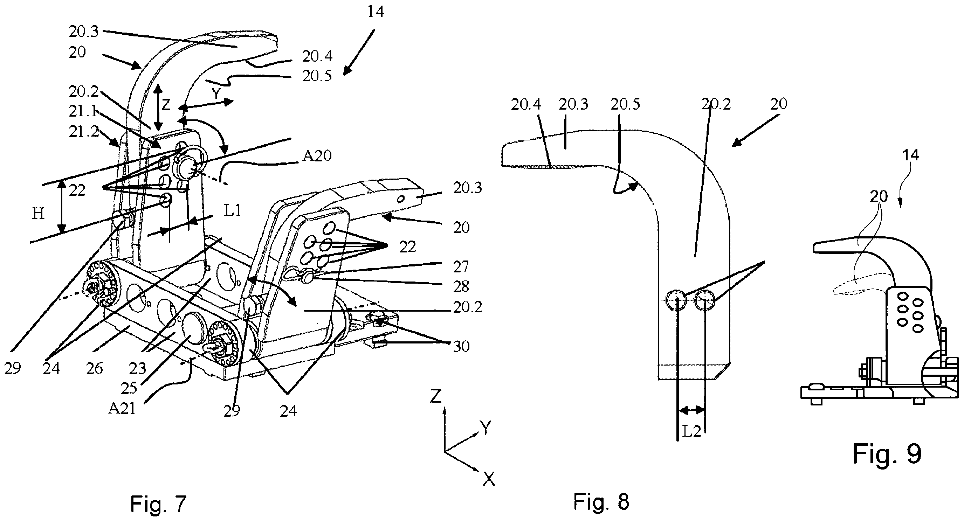

Eine Ausgestaltungsvariante einer Spannvorrichtung 14 ist in den Figuren 7 bis 10 dargestellt.

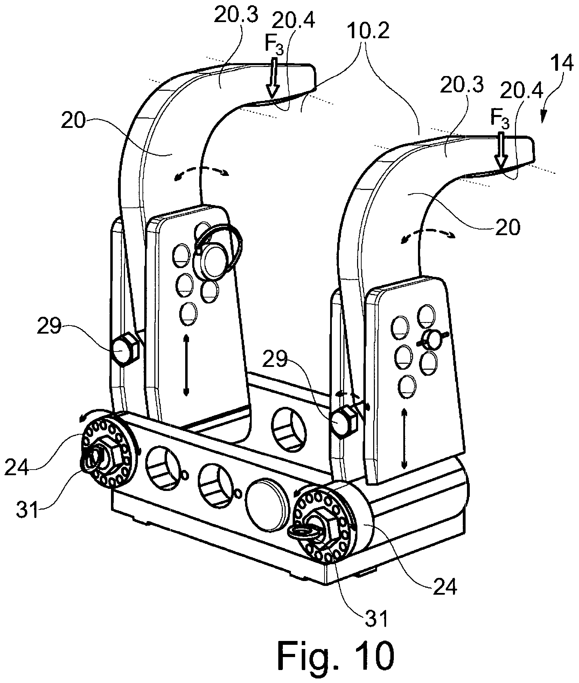

Die Spannvorrichtung 14 fixiert den nicht dargestellten Radsatz auf der Vorrichtung, wobei die Spannvorrichtung 14 in der Lage ist, den Radsatz während des Festklemmens mit der Kraft F3 (s. Fig. 10) nach unten zu beaufschlagen, die für eine Bearbeitung der Räder erforderlich ist.
Mit dieser Lösung kann der Radsatz in einer stabilen Lage gehalten werden, um eine Störung des Reprofilierungsverfahrens durch die mechanische Bearbeitung zu verhindern.

Die Spannvorrichtung 14 weist gemäß Figur 7 zwei voneinander beabstandete Spannhaken 20 auf. Jeder Spannhaken 20 ist zwischen zwei Hakenhaltern 21.1 (innen) und 21.2 (außen) in Richtung zum Radsatz (nicht dargestellt) schwenkbar um eine sich in X-Richtung erstreckende Schwenkachse A20 angeordnet (s. Figuren 7 und 10). Die Hakenhalter 21.1, 21.2 erstrecken sich in Spannposition vertikal und weisen neben und übereinander angeordnete Querbohrungen 22 auf, wobei die Querbohrungen 22 der Hakenhalter 21.1, 21.2 im Wesentlichen zueinander fluchten. Die oberste und unterste Querbohrungen sind in einer Höhe H voneinander beabstandet und der seitliche Abstand der Querbohrungen 22 beträgt eine Länge L1. Die Hakenhalter 21.1, 21.2 werden zwischen zwei Befestigungsplatten 23, über jeweils eine exzentrische Lagerung mittels Exzenterbuchsen 24 um eine sich in Y-Richtung erstreckende Schwenkachse A21 schwenkbar aufgenommen und sind über die Exzenterbuchsen 24 in der Höhe verstellbar.
Zwischen den Befestigungsplatten 23 erstreckt sich weiterhin ein Sicherheitsbolzen 25, der vermeidet, dass die Hakenhalter 21.1, 21.2 nach unten durchschwenken.
Die Befestigungsplatten 23 sind auf einer Grundplatte 26 angeordnet, die zur Befestigung der Spannvorrichtung 14 auf dem Hauptgestell 4 (s. Figur 3) dient.

Die Spannhaken 20 weisen jeweils zwei Querbohrungen 20.1 auf, die aus Figur 8 ersichtlich sind, in einem Abstand L2 zueinander beabstandet sind und in einem sich nach unten erstreckenden Bereich 20.2 des jeweiligen Spannhakens 20 ausgebildet sind. Jeder Spannhaken 20 weist weiterhin einen sich in Richtung zum Radsatz seitlich erstreckenden Bereich 20.3 auf, an dessen Unterseite eine ballige/konvex gekrümmte Spannfläche 20.4 ausgebildet ist.
Zwischen dem sich nach unten erstreckenden Bereich 20.2 und dem seitlich erstreckenden Bereich 20.3 ist weiterhin ein innen liegender Radius 20.5 bzw. eine Hohlkehle ausgebildet.
Die Spannhaken 20 werden zu deren Montage zwischen den Hakenhaltern 21.1, 21.2 in der erforderlichen Position angeordnet, so dass eine der Querbohrungen 20.1 mit einer der Querbohrungen 22 der Hakenhalter fluchtet und dann mittels eines Befestigungsbolzens 27, der durch die Querbohrungen 22 der Hakenhalter 21.1, 21.1 und eine Querbohrung 20.1 des Spannhakens 20 eingebracht wird, befestigt. Der Befestigungsbolzen 27 wird dann mit einem Splint 28 axial fixiert. Der Spannhaken ist damit um die Längsachse des Befestigungsbolzens, welche die Drehachse A20 bildet, schwenkbar zwischen den Hakenhaltern 21.1, 21.2 aufgenommen.

Unterhalb der Spannhaken 20 sind zwischen den Hakenhaltern 21.1, 21.2 Gewindebolzen 29 vorgesehen, die zur Einstellung der Neigung der Spannhaken 20 dienen.

Aufgrund der Verwendung der jeweils 2 Hakenhalter (links und rechts) 21.1, 21.2, in welchen die Spannhaken 20 leicht auswechselbar aufgenommen werden, muss während des Service eines Radsatzes nicht der gesamte Hakenhalter 21.1, 21.2 bzw. die gesamte Spanneinrichtung 14 gewechselt werden; es genügt ein Austausch des Spannhakens 20 für den vorderen bzw. hinteren Radsatz. Dies ermöglicht eine kurze Einstellungszeit. Durch die Verwendung und das sehr einfache Einwechseln unterschiedlich großer Spannhaken 20 können alle Radsatzvarianten eines Eisenbahnwagens in einem Zug/einer Bearbeitungsfolge gewartet werden, ohne große Änderungen an der Einstellung der Spanneinrichtung 14 vornehmen zu müssen.
Aufgrund der Befestigung der Grundplatte 26 der Spanneinrichtung 14 mittels Nutschrauben 30 am Grundgestell in die in entsprechende Befestigungsnuten im Grundgestell eingreifen (nicht dargestellt), ist die Position der Spannvorrichtung 14 verstellbar, so dass auch diesbezüglich verschiedene Radsätze bearbeitet werden können.
Aufgrund der Möglichkeit zur Verwendung austauschbarer Haken kann das System einfach an andere Radsatztypen angepasst werden. Dazu muss nur eine neue Form des Spannhakens entworfen werden.

Aufgrund der balligen/konvex gekrümmte Spannfläche 20.4 der Spannhaken 20 wird eine hohe Haltekraft/Anpresskraft bei minimaler Schädigungsgefahr für die Anstriche/die Beschichtung im Bereich der zu spannenden Achslager (10.1 - s. Fig.4) bzw. deren sich seitlich erstreckenden Ausleger 10.4 (siehe Fig. 4) erreicht. Weiterhin wird sicher gestellt, dass bei unterschiedlichen Neigungswinkeln der Spannhaken 20 immer ein zuverlässiger Kontakt der Spannfläche 20.4 mit den Auslegern des Radlagers gewährleistet ist.

Durch den zwischen dem sich nach unten erstreckenden Bereich 20.2 und dem seitlich erstreckenden Bereich 20.3 des Spannhakens 20 ausgebildeten innen liegenden Radius 20.5 bzw. eine Hohlkehle wird gesichert, dass die Beschichtung des Radlagers bzw. dessen Auslegers bei dem Spannvorgang und der Spannung nicht beschädigt wird.

Nach spielfreier Befestigung/Spannung des Rades eines Radreifens mittels der Spanneinrichtung auf dem Hauptgestell der Vorrichtung (durch die von unten wirkenden Spannkräfte F1, F2 und die von oben wirkende Spannkraft F3 - siehe Figur 6 - gewährleistet die erfindungsgemäße Lösung die Aufnahme der Kräfte, die beim Reprofilieren durch eine spanende Bearbeitung/Drehbearbeitung eines Rades auftreten.

Durch drei Einstellmöglichkeiten der Spannhaken ist das System ausreichend flexibel für die Wartung von mehr als einem Radsatz.

Aus Figur 9 ist dabei verdeutlicht, dass der Spannhaken 20 unterschiedliche Positionen einnehmen kann, da der Sicherungsstift/Splint 27 (s. Fig. 1) in 6 Positionen platziert werden kann womit die Höhe des Spannhakens 20 eingestellt wird und dieser näher oder entfernter in Richtung zum Radlager positionierbar ist, da die Querbohrungen 22 und die Querbohrungen 20.1 des Spannhakens auch in Y-Richtung zueinander beabstandet sind.

Eine weitere Einstellmöglichkeit besteht darin, dass gemäß Figur 10 durch Drehen des Bolzens 31 der Exzenterbuchse 24 eine Feineinstellung der Höhe des Spannhakens 20 erreicht wird.

Eine weitere Anpassung der Lage der Spannhaken 20 ist mit dem Gewindebolzen 29 möglich, durch welchen der Neigungswinkel des Spannhakens 20 so festgelegt wird, dass der Angriff des sich seitlich erstreckenden Bereiches 20.3 des Spannhakens und somit der Spannfläche 20.4 gegenüber dem Achslager oder dessen Auslegers optimiert werden kann; dies eliminiert die letzte Möglichkeit für ein Spiel.

Insgesamt ist durch diese Ausführung der Spannvorrichtung 14 eine hohe Flexibilität gewährleistet.

Aus Figur 10, die eine Spannposition andeutet, ist auch verdeutlicht, dass die Spannflächen 20.4 der Spannhaken 20 gegen die gestrichelt angedeuteten Ausleger 10.2 eines Achslagers mit der Spannkraft F3 wirken.

### Bezugszeichenliste

- 1: Vorrichtung
- 2: Schiene
- 3: Untergestell
- 4: Hauptgestell
- 5: Verfahrräder
- 6: Schwenkhebel
- 7: Schubelement
- 8: Arbeitszylinders
- 10: Räder
- 10.1: Radlager
- 10.2: Ausleger
- 11: Stützrollen
- 11.1: Zwischenelement
- 12: Antriebsrollen
- 13: Antriebsrollen
- 14: Spanneinrichtung
- 15: Querträger
- 16: Stützen
- 17: Stützen
- 18: Zylinder
- 18.1: Kolbenstange
- 19: Zugstange
- 19.1: Verbindungsplatte
- 20: Spannhaken
- 20.1: Querbohrungen des Spannhakens 20
- 20.2: sich nach unten erstreckender Bereich des jeweiligen Spannhakens 20
- 20.3: sich in Richtung zum Radsatz seitlich erstreckender Bereich des jeweiligen Spannhakens 20
- 20.4: Spannfläche des Spannhakens 20
- 20.5: innen liegender Radius des Spannhakens 20
- 21.1: Hakenhalter innen
- 21.2: Hakenhalter außen
- 22: Querbohrungen der Hakenhalter 21.1, 21.2
- 23: Befestigungsplatten
- 24: Exzenterbuchse
- 25: Sicherheitsbolzen
- 26: Grundplatte
- 27: Befestigungsbolzen
- 28: Splint
- 29: Gewindebolzen
- 30: Nutschrauben
- 31: Bolzen

- 100: Aktorik
- 200: Support
- A11: Drehachsen der Stützrollen 11
- A12: Drehachse der ersten Antriebsrolle 12
- A13: Drehachse der zweiten Antriebsrolle 13
- A20: Schwenkachse der Spannhaken
- A21: Schwenkachse der Hakenhalter
- AE: Schwenkachse
- B1: erster Anbindungspunkt
- B2: zweiter Anbindungspunkt
- B3: dritter Anbindungspunkt
- F1, F2: radiale Kräfte
- F3: Kraft von oben
- H: Höhe
- L1: erste Länge
- L2: zweite Länge
- R: Radius
- S: Stellmittel

## Patentansprüche

1. Mobile Vorrichtung zur Bearbeitung zweier Räder (10) eines Radsatzes
- mit mindestens zwei Stützrollen (11) zum Abstützen jeweils eines Rades (10) des Radsatzes; und
- mit mindestens einer Antriebsrolle (12) zum Antreiben jeweils eines Rades (10) des Radsatzes,
**dadurch gekennzeichnet, dass**
- die Stützrollen (11) um eine Drehachse (A11) drehbar aufgenommen sind und mit der Drehachse (A11) exzentrisch schwenkbar/verstellbar gelagert und entsprechend des Durchmessers des Rades (10) in der Höhe sowie aufeinander zu und voneinander weg verstellbar/schwenkbar sind.

2. Vorrichtung nach Anspruch 1, **dadurch gekennzeichnet, dass** die Stützrollen (11) erste Drehachsen (A11) aufweisen, die im Wesentlichen in Richtung der Radachse (Y-Richtung), ausgerichtet sind und dass die Antriebsrollen (12) zweite Drehachsen (A12) aufweisen, in einem Winkel zu den ersten Drehachsen (A11) der Stützrollen (11) angeordnet/geneigt sind.

3. Vorrichtung nach Anspruch 1 oder 2, **dadurch gekennzeichnet, dass** jeweils Stützrollen (11) eines Rades (10) mittels eines Zylinders (18) gleichzeitig verstellbar sind.

4. Vorrichtung nach Anspruch 2 oder 3, **dadurch gekennzeichnet, dass** jede Stützrolle (11) in einem Drehpunkt exzentrisch gelagert ist und um den Drehpunkt mittels einer Zugstange (19) drehbar ist, wobei die zwei Zugstangen (19) eines Paares von Stützrollen (11), welches einem Rad (10) zugeordnet sind, mit dem Zylinder (18) wirkverbunden sind.

5. Vorrichtung nach einem der Ansprüche 2 bis 4, **dadurch gekennzeichnet, dass** die Zugstangen (19) an ihren unteren Enden mit einer Verbindungsplatte (20) gekoppelt sind, die mit dem Zylinder (18) verbunden ist.

6. Vorrichtung nach einem der Ansprüche 2 bis 5, **dadurch gekennzeichnet, dass** die zwei Stützrollen (11) auf jedes Rad (10) mit einer nach oben gerichteten Kraft F1, F2 wirken und dass der Radsatz im Bereich seiner Radlager (10.1) mittels einer Spanneinrichtung (14) lagefixiert ist, wobei im Bereich der Spanneinrichtung (14) eine Kraft F3 nach unten (Z-Richtung) auf die Achse/das Radlager (10.1) des Radsatzes und somit auf das Rad (10) wirkt.

7. Vorrichtung nach Anspruch 6, **dadurch gekennzeichnet, dass** jede auf ein Rad (10) wirkende Spanneinrichtung (14) zwei beidseitig am Radlager angreift.

8. Vorrichtung nach Anspruch 6 oder 7, **dadurch gekennzeichnet, dass** die Spanneinrichtung (14) einen schwenkbaren und höhenverstellbaren Spannhaken (20) aufweist.

9. Vorrichtung nach Anspruch 1, **dadurch gekennzeichnet, dass** eine erste Antriebsrolle (12) außen am Rad (10) und eine zweite Antriebsrolle (13) innen im Bereich des Radreifens angreifen, wobei die zweite Antriebsrolle (13) mittels eines inneren Antriebes gegen das Rad (10) spannbar ist, so dass das Rad (10) auch mit der ersten Antriebsrolle (12) in Wirkverbindung gelangt.

10. Vorrichtung nach Anspruch 1 oder 9, **dadurch gekennzeichnet, dass** die ersten und/oder zweiten Antriebsrollen (12, 13) zur Anpassung an den Raddurchmesser schwenkbar gelagert sind derart, dass sie im radial (umfangsseitig) außen liegenden Bereich der Außen- und Innenseite des Radreifens des Rades (10) angreifen.

## Claims

1. Mobile device for machining two wheels (10) of a wheelset,
- with at least two support rollers (11), for supporting a respective wheel (10) of the wheelset; and
- with at least one drive roller (12) for driving a respective wheel (10) of the wheelset,
**characterised in that**
- the support rollers (11) are held such that they can rotate about a rotational axis (A11), are mounted to pivot/be displaced eccentrically in relation to the rotational axis (A11) and, in accordance with the diameter of the wheel (10), are height-adjustable and can be displaced/pivoted towards and away from one another.

2. Device according to claim 1, **characterised in that** the support rollers (11) have first rotational axes (A11), which are orientated substantially in the direction of the wheel axis (Y direction), and that the drive rollers (12) have second rotational axes (A12), which are arranged/inclined at an angle to the first rotational axes (A11) of the support rollers (11).

3. Device according to claim 1 or 2, **characterised in that** respective support rollers (11) of a wheel (10) can be displaced simultaneously by means of a cylinder (18).

4. Device according to claim 2 or 3, **characterised in that** each support roller (11) is mounted eccentrically in a rotation point and is rotatable about the rotation point by means of a connecting rod (19), wherein the two connecting rods (19) of a pair of support rollers (11), which are assigned to a wheel (10), are operationally connected with the cylinder (18).

5. Device according to any one of claims 2 to 4, **characterised in that** the connecting rods (19) are coupled on their lower ends with a connecting plate (20), which is connected with the cylinder (18).

6. Device according to any one of claims 2 to 5, **characterised in that** the two support rollers (11) act on each wheel (10) with an upwardly directed force F1, F2 and that the wheelset is held in position in the region of its wheel bearings (10.1) by means of a clamping apparatus (14), wherein in the region of the clamping apparatus (14) a force F3 acts downwards (Z direction) onto the axle/wheel bearing (10.1) of the wheelset and thus onto the wheel (10).

7. Device according to claim 6, **characterised in that** each clamping apparatus (14) acting on a wheel (10) touches both sides of the wheel bearing.

8. Device according to claim 6 or 7, **characterised in that** the clamping apparatus (14) has a pivotable and height-adjustable clamping hook (20).

9. Device according to claim 1, **characterised in that** a first drive roller (12) touches the outside of the wheel (10) and a second drive roller (13) touches inside in the region of the wheel tyre, wherein the second drive roller (13) is clampable against the wheel (10) by means of an internal drive, such that the wheel (10) also comes into operational connection with the first drive roller (12).

10. Device according to claim 1 or 9, **characterised in that** the first and/or second drive rollers (12, 13) are pivotably mounted for adjustment to the wheel diameter in such a way that they touch in the radially outer region (on the circumferential side) of the outside and inside of the wheel tyre of the wheel (10).

## Revendications

1. Dispositif mobile d'usinage de deux roues (10) d'un train de roues
- avec au moins deux rouleaux d'appui (11) destinés à servir d'appui à respectivement une roue (10) du train de roue ; et
- avec au moins un rouleau d'entraînement (12) destiné à entraîner respectivement une roue (10) du train de roues,
**caractérisé en ce que**
- les rouleaux d'appui (11) sont logés de manière à pouvoir tourner autour d'un axe de rotation (A11) et sont montés de manière à pouvoir pivoter/se déplacer de manière excentrée avec l'axe de rotation (A11) et peuvent se déplacer/pivoter en fonction du diamètre de la roue (10) en hauteur ainsi qu'en se rapprochant et en s'éloignant les uns des autres.

2. Dispositif selon la revendication 1, **caractérisé en ce que** les rouleaux d'appui (11) présentent des premiers axes de rotation (A11), qui sont orientés sensiblement en direction de l'essieu de roue (direction Y), et **en ce que** les rouleaux d'entraînement (12) présentent des deuxièmes axes de rotation (A12), qui sont disposés/inclinés en formant un angle par rapport aux premiers axes de rotation (A11) des rouleaux d'appui (11).

3. Dispositif selon la revendication 1 ou 2, **caractérisé en ce que** respectivement des rouleaux d'appui (11) d'une roue (10) peuvent être déplacés simultanément au moyen d'un cylindre (18).

4. Dispositif selon la revendication 2 ou 3, **caractérisé en ce que** chaque rouleau d'appui (11) est monté de manière excentrée dans un point de rotation et peut être amené en rotation autour du point de rotation au moyen d'une tige de traction (19), dans lequel les deux tiges de traction (19) d'une paire de rouleaux d'appui (11), laquelle sont associés à une roue (10), sont en liaison fonctionnelle avec le cylindre (18).

5. Dispositif selon l'une quelconque des revendications 2 à 4, **caractérisé en ce que** les tiges de traction (19) sont couplées à leurs extrémités inférieures à une plaque de liaison (20), qui est reliée au cylindre (18).

6. Dispositif selon l'une quelconque des revendications 2 à 5, **caractérisé en ce que** les deux rouleaux d'appui (11) agissent sur chaque roue (10) avec une force F1, F2 dirigée vers le haut et **en ce que** le train de roues est fixé en position dans la zone de ses roulements de roue (10.1) au moyen d'un appareil de serrage (14), dans lequel, dans la zone de l'appareil de serrage (14), une force F3 agit vers le bas (direction Z) sur l'essieu/le roulement de roue (10.1) du train de roues et de cette manière sur la roue (10).

7. Dispositif selon la revendication 6, **caractérisé en ce que** chaque appareil de serrage (14) agissant sur une roue (10) vient en contact bilatéralement avec le logement de roue.

8. Dispositif selon la revendication 6 ou 7, **caractérisé en ce que** l'appareil de serrage (14) présente un crochet de serrage (20) pivotant et réglable en hauteur.

9. Dispositif selon la revendication 1, **caractérisé en ce qu'**un premier rouleau d'entraînement (12) vient en contact à l'extérieur avec la roue (10) et un deuxième rouleau d'entraînement (13) vient en contact à l'intérieur dans la zone du pneumatique de roue, dans lequel le deuxième rouleau d'entraînement (13) peut être serré contre la roue (10) au moyen d'un entraînement intérieur, de sorte que la roue (10) parvient également en liaison fonctionnelle avec le premier rouleau d'entraînement (12).

10. Dispositif selon la revendication 1 ou 9, **caractérisé en ce que** les premiers et/ou deuxièmes rouleaux d'entraînement (12, 13) sont montés pivotants pour l'adaptation au diamètre de roue, de telle sorte qu'ils viennent en contact dans la zone, située radialement (côté périphérie) à l'extérieur, de la face extérieure et intérieure du pneumatique de roue de la roue (10).
